# EUROPÄISCHE PATENTSCHRIFT

(11) **EP 0 905 160 B1**
(45) Veröffentlichungstag und Bekanntmachung des Hinweises auf die Patenterteilung: **09.03.2005**
(21) Anmeldenummer: 98117895.7
(22) Anmeldetag: 22.09.1998
(51) Int. Cl.: C08G 18/48, C08J 9/14

(54) **Lagerstabile, treibmittelhaltige Emulsionen zur Herstellung von Hartschaumstoffen auf Isocyanatbasis**
Storage-stable emulsions containing blowing agents for the preparation of rigid foams based on isocyanate
Emulsions stables au stockage contenant des agents porogènes pour la préparation de mousses rigides à base d'isocyanate

(30) Priorität: 24.09.1997 DE 19742011
(43) Veröffentlichungstag der Anmeldung: 31.03.1999
(73) Patentinhaber: BASF AKTIENGESELLSCHAFT, 67056 Ludwigshafen (DE)
(72) Erfinder: Rotermund, Udo, Dr., 01990 Ortrand (DE); Biedermann, Anja, 01968 Senftenberg (DE); Hempel, Renate, 01945 Ruhland (DE); Wiegmann, Werner, 32369 Rahdem (DE); Heinz, Marion, 02994 Bernsdorf (DE)

(56) Entgegenhaltungen:
- WO-A-92/16573
- DE-A- 4 328 383
- DE-A- 19 610 262

## Beschreibung

Die Erfindung betrifft lagerstabile, treibmittelhaltige Emulsionen zur Herstellung von Hartschaumstoffen auf Isocyanatbasis.

Die Herstellung von Hartschaumstoffen auf Isocyanatbasis und ihre Verwendung als Wärmeisolationsmaterial ist seit langem bekannt und vielfach in der Literatur beschrieben. Als chemische Strukturen, die aus den Isocyanatgruppen entstehen, können hierbei Polyurethane, Polyharnstoffe, Polyisocyanurate, aber auch weitere Isocyanataddukte, wie Allophanate, Biurete, Carbodiimide und deren Isocyanataddukte, Oxazolidine, Polyimide, Polyamide u.a. vorliegen. Dabei wird die Art dieser Strukturen gesteuert durch die Reaktionspartner der Isocyanate, die Katalyse und die Reaktionsbedingungen. Man faßt diese Isocyanataddukte meist unter dem Begriff Polyurethane (PUR) zusammen, da die Polyurethane unter den Polyisocyanataddukten die häufigste und wichtigste Stoffgruppe sind. Hartschaumstoffe auf Isocyanatbasis bezeichnet man daher häufig als PUR-Hartschaumstoffe, bzw. im Falle eines bedeutenden Anteils an Isocyanuratgruppen auch als Polyurethan/Polyisocyanurat-Hartschaumstoffe (PUR/PIR-Hartschaumstoffe).

Die Herstellung von derartigen Hartschaumstoffen wird beispielsweise im Kunststoff-Handbuch, Band VII, "Polyurethane", 3. Auflage, herausgegeben von Günter Oertl, Carl-Hanser-Verlag, München, Wien, 1993, beschrieben.

Um möglichst feinzellige Polyurethan-Hartschaumstoffe zu erhalten, ist es vorteilhaft, das Treibmittel in den Polyurethan-Aufbaukomponenten zu emulgieren.

In EP-A-351 614 wird ein Verfahren zur Herstellung von Polyurethan-Schaumstoffen beschrieben, bei dem als Treibmittel perfluorierte Kohlenwasserstoffe verwendet werden, die in mindestens einer der Polyurethan-Aufbaukomponenten emulgiert werden. DE-A-41 43 148 beschreibt treibmittelhaltige Emulsionen aus Isoalkanen mit mindestens 6 Kohlenstoffatomen und niedrigsiedenden fluorierten oder perfluorierten organischen Verbindungen. In DE-A-42 00 558 wird die Kombination von Fluorverbindungen mit Kohlenwasserstoffen mit 4 bis 8 Kohlenstoffatomen, einschließlich Cyclopentan, beschrieben. Auch DE-A-41 21 161 beschreibt Emulsionen mit fluorierten Treibmitteln.

Die unter Verwendung dieser Emulsionen hergestellten sogenannten Emulsionsschäume zeichnen sich durch sehr kleine Zellen aus, die zu niedrigen Wärmeleitfähigkeiten führen. Eine wesentliche Voraussetzung zur Herstellung dieser Emulsionen ist die Mitverwendung mindestens einer hoch- und/oder perfluorierten Verbindung, gegebenenfalls zusammen mit anderen Treibmitteln, beispielsweise Kohlenwasserstoffen.

Weitere Varianten zu Emulsionsschäumen werden beispielsweise in EP-A-405 439, WO 96/25455, US-A-5,346,928 oder EP-A-662 494 beschrieben, wobei hier das Ziel in der Bereitstellung von offenzelligen Schäumen für die Vakuumtechnik bestand.

WO 95/02620 beschreibt die Herstellung fein- und offenzelliger Schaumstoffe für die Vakuumtechnik nach dem Emulsionsverfahren, wobei die Emulsion mit Hilfe einer inerten, in den Polyurethan-Aufbaukomponenten unlöslichen organischen Flüssigkeit, die als disperse Phase einer Mikroemulsion vorhanden ist, hergestellt wird. Als inerte organische Flüssigkeiten werden wiederum hoch- oder perfluorierte Verbindungen eingesetzt. All diese Veröffentlichungen zeigen die Bedeutung der fluorierten Verbindungen zur Emulsionsbildung.

Obwohl das Ozonschädigungspotential (ODP) dieser Verbindungen gleich Null ist, tragen die Fluorverbindungen erheblich zum Treibhauspotential (GWP) bei. Außerdem zersetzen sich diese Verbindungen in der Atmosphäre in saure und umweltschädigende Zersetzungsprodukte, insbesondere Fluorwasserstoff.

Ein halogenfreier Emulsionsschaum wird in EP-A-394 769 beschrieben. Er enthält mindestens einen Polyesteralkohol, einen Emulgator sowie feinverteilten Stickstoff. In JP 08/193115 wird eine halogenfreie Emulsion aus einem Polyesterol und einem Prepolymer aus einem Polyetherol und Isocyanat beschrieben. DE-A-43 28 383 beschreibt eine Polyolkomponente mit einem nur teilweise gelösten Treibmittel aus Kohlenwasserstoffen, das als Emulsion vorliegt. Die Polyolkomponente enthält dabei mindestens einen Polyetheralkohol mit Oxyethylengruppen und mindestens einen Polyetheralkohol, der frei von Oxyethylengruppen ist. Nachteilig ist hierbei die hohe Eigenreaktivität der Oxyethylengruppen enthaltenden Polyetheralkohole. Damit muß zur Einstellung einer gewünschten Abbindezeit weniger Katalysator verwendet werden, wodurch die Rektion nach Erreichen der Abbindezeit langsamer verläuft und der Schaum schlechter durchhärtet. Damit kommt es zu unerwünscht langen Entformzeiten bei der Formverschäumung bzw. zu geringen Arbeitsgeschwindigkeiten bei der Doppelband-Technologie.

Außerdem sind die dort beschriebenen Emulsionen nur sehr kurze Zeit lagerstabil.

In US-A-5,488,071, US-A-5,484,817 und US-A-5,464,562 werden monofunktionelle Polyoxyalkylen-Polyetherole mit Fettalkoholen als Startsubstanzen als Emulgatoren und Polyesteralkohole als Polyolkomponenten vorgeschlagen. Doch auch diese Emulsionen weisen nur eine ungenügende Lagerstabilität auf. Außerdem senkt die Verwendung der monofunktionellen Emulgatoren die Gesamtfunktionalität des Polyolgemisches sehr stark ab. Damit kommt es zu einer verminderten Vernetzung des Schaumes mit allen damit verbundenen Nachteilen, wie verschlechterte Aushärtung der Reaktionsmischung und schlechtere Temperaturstabilität des Hartschaumes. Bei der Verwendung von nicht funktionellen Emulgatoren, wie Benzyl-n-Butylphthalat gemäß DE-A-41 09 076, verschlechtert sich die Haftung des Polyurethans an den Deckschichten sowie auch die Temperaturstabilität des Schaumes beträchtlich.

Die Aufgabe der Erfindung bestand darin, lagerstabile halogenfreie Emulsionen zur Herstellung von Hartschaumstoffen auf Isocyanatbasis mit Kohlenwasserstoffen als Treibmittel herzustellen, die zu Hartschaumstoffen mit verbesserten Kennwerten, z.B. mit einer verbesserten Temperaturstabilität sowie mit einer guten Aushärtung des Reaktionsgemisches verarbeitet werden können.

Die Aufgabe konnte überraschenderweise gelöst werden durch Mitverwendung von Polyetheralkoholen mit einer Funktionalität von größer 1,5 und einer Hydroxylzahl von 10 bis 100 mg KOH/g als reaktive Emulsionsstabilisatoren in der Polyolkomponente.

Gegenstand der Erfindung sind demzufolge lagerstabile, halogenfreie Emulsionen, bestehend aus
a) gegenüber Isocyanatgruppen reaktive Wasserstoffatome enthaltende Verbindungen,
b) Wasser
c) physikalisch wirkende, halogenfreie Treibmittel, sowie gegebenenfalls
d) in der Polyurethanchemie übliche Hilfsmittel und/oder Zusatzstoffe,
dadurch gekennzeichnet, daß die Komponente a) Polyetheralkohole mit einer Funktionalität von größer als 1,5, einer Hydroxylzahl von 10 mg KOH/g bis 100 mg KOH/g in einer Menge von 0,2 Masse-% bis 80 Masse-%, bezogen auf die Masse der Komponente a) enthält und als physikalische, halogenfreie Treibmittel a) Kohlenwasserstoffe mit 3 bis 10 Kohlenstoffatomen eingesetzt werden.

Gegenstand der Erfindung sind weiterhin ein Verfahren zur Herstellung von Hartschaumstoffen auf Isocyanatbasis durch Umsetzung der Emulsionen mit Polyisocyanaten sowie nach diesem Verfahren hergestellte Hartschaumstoffe auf Isocyanatbasis.

Die erfindungsgemäß eingesetzten Polyetheralkohole haben vorzugsweise eine Funktionalität von 2,5 bis 3,5, eine Hydroxylzahl von 25 mg KOH/g bis 50 mg KOH/g und werden insbesondere in einer Menge von 1 bis 50 Masse-%, bezogen auf die Masse der Komponente a), eingesetzt.

Als physikalisch wirkende Treibmittel c) kommen vorzugsweise Pentane, insbesondere Cyclopentan, zum Einsatz. Die Menge der physikalisch wirkenden Treibmittel beträgt mindestens 5 Masse-% bis höchstens 25 Masse-%, bevorzugt 12 Masse-% bis 21 Masse-%, jeweils bezogen auf die Summe der Komponenten a) bis d).

Die Menge des Wassers b) beträgt 0,01 Masse-% bis 5 Masse-%, vorzugsweise 0,35 Masse-% bis 2 Masse-% und insbesondere 0,5 Masse-% bis 1,5 Masse-%, jeweils bezogen auf die Summe der Komponenten a) bis d).

Als besonders vorteilhaft hat sich der Einsatz von Polyetheralkoholen erwiesen, die durch Anlagerung von Ethylenoxid und/oder Propylenoxid an Glycerin oder Trimethylolpropan (TMP) hergestellt werden. Die Verteilung des Alkylenoxids in der Polyetherkette kann dabei blockweise oder statistisch sein, wobei am Kettenende häufig ein Ethylenoxid-Endblock angelagert ist.

Die erfindungsgemäß verwendeten Polyetheralkohole sind in der Reaktionsmischung zumeist löslich, können jedoch in Ausnahmefällen auch unlöslich sein. Die erfindungsgemäßen Emulsionen sind zumeist milchig-trüb, können dem bloßen Auge aber auch transparent erscheinen. Die Emulgierung kann durch Dosierung der physikalisch wirkenden Treibmittel c) in die Mischung der Komponenten a), b) und d) erfolgen. Die Emulsionen sind über Wochen lagerstabil. Es ist auch möglich, die Emulgierung durch die Zudosierung der Komponente c) in die Komponenten a), b) und d) im oder kurz vor dem Mischkopf einer Dosiermaschine unmittelbar vor der Verschäumung durchzuführen.

Daß es gelingen würde, mit den erfindungsgemäß verwendeten Polyetheralkoholen, wie sie üblicherweise bei der Herstellung von Polyurethan-Weichschaumstoffen eingesetzt werden, stabile treibmittelhaltige Emulsionen zu erhalten, war überraschend.

Die Emulsionen können mit den hierzu üblichen Polyisocyanaten zu Hartschaumstoffen auf Isocyanatbasis umgesetzt werden. Vorzugsweise handelt es sich hierbei um Diphenylmethan-diisocyanat (MDI) und Gemische aus MDI mit Polyphenylenpolymethylenpolyisocyanaten (Roh-MDI).

Zu den einzelnen Bestandteilen der Emulsionen ist im einzelnen folgendes zu sagen.

Als Verbindungen mit gegenüber Isocyanatgruppen reaktiven Wasserstoffatomen a) werden neben den oben beschriebenen Polyetheralkoholen weitere NH-, NH₂-, insbesondere jedoch OH-funktionelle Verbindungen eingesetzt. Bei den OH-funktionellen Verbindungen werden insbesondere Polyetherole und/oder Polyesterole eingesetzt. Die Polyetherole werden durch Anlagerung von niederen Alkylenoxiden, vorzugsweise Ethylenoxid und/oder Propylenoxid, an OH- und/oder NH-funktionelle Startsubstanzen hergestellt. Vorzugsweise für die erfindungsgemäßen Emulsionen verwendete OH-funktionelle Startsubstanzen haben vier oder mehr OH-Gruppen im Molekül. Beispiele hierfür sind Zuckeralkohole, wie Saccharose, Sorbit, Xylit, Mannit oder Phenol-Formaldehyd-Kondensate, sogenannte Novolake. Beispiele für NH-funktionelle Startsubstanzen sind aliphatische und vorzugsweise aromatische Amine, wie Toluylindiamin (TDA), Diphenylmethandiamin (MDA), gegebenenfalls im Gemisch mit Poly-MDA.

Vorzugsweise erfolgt die Mitverwendung von Polyesteralkoholen. Diese werden insbesondere durch Kondensation mehrfunktioneller Carbonsäuren mit mehrfunktionellen Alkoholen hergestellt.

Zur Herstellung etwas flexiblerer Hartschaumstoffe werden insbesondere Polyesteralkohole eingesetzt, die auf Basis von aromatischen Polysäuren oder Säuren, die Doppelbindungen im Molekül enthalten, besonders bevorzugt Polyesterole, die beide Säurearten im Molekül enthalten.

Weiterhin können Amin- und insbesondere hydroxylfunktionelle Kettenverlängerer und/oder Vernetzer eingesetzt werden. Hierbei handelt es sich zumeist um zwei- oder höherfunktionelle Alkohole mit Molekulargewichten im Bereich von 62 bis etwa 400.

Neben den beschriebenen Kohlenwasserstoffen als physikalisch wirkende Treibmittel c) können auch noch weitere halogenfreie Treibmittel, beispielsweise Methylformiat, Methylal, niedermolekulare Alkohole, Diethylether, Aceton, oder ähnliche verwendet werden.

Als gegebenenfalls mitzuverwendende Hilfs- und/oder Zusatzstoffe d) werden die üblichen und bekannten Katalysatoren, Zellregler, Stabilisatoren, Flammschutzmittel und/oder Füllstoffe verwendet.

Weitere Einzelheiten zu den Komponenten finden sich beispielsweise im Kunststoff-Handbuch, Band VII, "Polyurethane", herausgegeben von Dr. Günter Oertl, 3. Auflage, 1993, Carl-Hanser-Verlag, München.

Die erfindungsgemäßen Emulsionen sind über Tage, Wochen und selbst Monate hinweg lagerfähig. Sie sind problemlos auf den herkömmlichen Maschinen zur Polyurethanherstellung einsetzbar.

Die Erfindung soll an den nachfolgenden Beispielen näher erläutert werden.

### Verwendete Rohstoffe:

### Polyole

### Polyol 1:

Hergestellt aus 25,2 Teilen Sorbit und 74,8 Teilen Propylenoxid mit Kalilauge als Katalysator und 0,5 Teilen Wasser als Costarter. Die Hydroxylzahl (OH-Zahl oder OHZ) beträgt 495 mg KOH/g, die Viskosität bei 20°C 17.900 mPas. Funktionalität: 5.

### Polyol 2:

Hergestellt aus Saccharose/Glyzerin/Wasser und Propylenoxid. Die Hydroxylzahl beträgt 490 mg KOH/g, die Viskosität bei 20°C 8.000 mPas. Funktionalität: 4,3.

### Polyol 3:

Hergestellt aus Saccharose (1 Teil), Pentaerythrit (1 Teil), Diethylenglykol (2 Teile), Wasser als Costarter und Propylenoxid mit Kalilauge als Katalysator. Die Hydroxylzahl beträgt 400 mg KOH/g, die Viskosität bei 20°C 2.200 mPas.

### Polyol 4:

Hergestellt aus 28 % Gemisch aus 2,3 = und 3,4-Toluylendiamin, 22 % Ethylenoxid und 50 % Propylenoxid mit Kalilauge als Katalysator. Die Hydroxylzahl beträgt 395 mg KOH/g, die Viskosität bei 20°C 8.176 mPas.

### Polyol 5:

Polyesteralkohol, hergestellt aus Adipinsäure/Phthalsäureanhydrid/Ölsäure im Verhältnis 1:2:1 mit 1,1,1-Trimethylolpropan zu einem Zahlenmittel der Molmasse von 530 g/Mol. Die Hydroxylzahl beträgt 385 mg KOH/g, die Viskosität bei 75°C 1.370 mPas.

### Polyol 5a:

Polyesteralkohol aus Glyzerin und Ricinusöl mit einer Hydroxylzahl von 500 mg KOH/g.

### Polyole 6:

### Polyol 6a:

Hergestellt aus Glyzerin als Starter und Propylenoxid als erster Block und Ethylenoxid als Endblock. Die Hydroxylzahl beträgt 35 mg KOH/g, die Viskosität bei 20°C 850 mPas. Das Masseverhältnis von Propylenoxid zu Ethylenoxid beträgt 6,4.

### Polyol 6b:

Hergestellt aus Trimethylolpropan als Starter und Propylenoxid als erster Block und Ethylenoxid als Endblock. Die Hydroxylzahl beträgt 26,5 mg KOH/g, die Viskosität bei 20°C 1.225 mPas. Das Masseverhältnis von Propylenoxid zu Ethylenoxid beträgt 3,7.

### Polyol 6c:

Hergestellt aus Glyzerin als Starter und Propylenoxid als erster Block und Ethylenoxid als Endblock. Die Hydroxylzahl beträgt 28 mg KOH/g, die Viskosität bei 20°C 1.130 mPas. Das Masseverhältnis von Propylenoxid zu Ethylenoxid beträgt 6,1.

### Polyol 6d:

Hergestellt aus Propylenglykol als Starter und Propylenoxid. Die Hydroxylzahl beträgt 55 mg KOH/g, die Viskosität bei 20°C 325 mPas.

### Polyol 6e:

Hergestellt aus einem Startergemisch aus Lignin und Monoethylenglykol mit Ethylenoxid als erster Block und Propylenoxid als Endblock. Die Hydroxylzahl beträgt 50 mg KOH/g, die Viskosität bei 20°C 850 mPas.

### Polyol 6f:

Hergestellt aus Propylenglykol als Starter mit Propylenoxid als erster Block und Ethylenoxid als Endblock. Die Hydroxylzahl beträgt 29 mg KOH/g, die Viskosität bei 20°C 780 mPas. Das Masseverhältnis von Propylenoxid zu Ethylenoxid beträgt 4,4.

### Polyol 7:

Hergestellt aus Trimethylolpropan und Ethylenoxid, die Hydroxylzahl beträgt 590 mg KOH/g.

### Isocyanat 1:

Polyisocyanat Lupranat® M 20 (BASF AG), ein Gemisch aus Diphenylmethandiisocyanat und Polyphenylpolyisocyanaten mit einem NCO-Gehalt von 31,7 % und einer Viskosität von 209 mPas bei 25°C.

### Isocyanat 2:

Polyisocyanat Lupranat® M 50 (BASF AG), ein Gemisch aus Diphenylmethandiisocyanat und Polyphenylpolyisocyanaten mit einem NCO-Gehalt von 31,5 % und einer Viskosität von 550 mPas bei 25°C.

### Isocyanat 3:

Polyisocyanat Lupranat® M 200 (BASF AG), ein Gemisch aus Diphenylmethandiisocyanat und Polyphenylpolyisocyanaten mit einem NCO-Gehalt von 30,5 % und einer Viskosität von 2.200 mPas bei 25°C.

Wenn nicht anders angegeben, handelt es sich bei den Mengenangaben um Gewichtsteile.

### Herstellung und Beurteilung der Emulsion:

160 ml der Emulsion aus wasserstoffaktiven Verbindungen, Stabilisatoren, Katalysatoren und dem Kohlenwasserstoff als physikalisches Treibmittel, beispielweise Cyclopentan, werden nach dem Vermischen in ein Reagenzglas mit 3 cm Durchmesser und 20 cm Höhe gegossen, mit einem Stopfen verschlossen und bei Raumtemperatur stehen gelassen. Beobachtet wird die Entstehung von evtl. sich abgrenzenden Phasen in Abängigkeit von der Zeit.

### Herstellung und Prüfung der Polyurethan- bzw. Polyurethan/Polyisocyanurat-Hartschaumstoffe:

### Becherverschäumung:

A- und B-Komponente wurden auf 20°C ± 0,5 K temperiert. 78 g der A- und B-Komponente wurden in einem Pappbecher mit ca. 660 ml Rauminhalt 10 Sekunden mit einem Laborrührwerk der Fa. Vollrath, Durchmesser 65 mm, bei 1.750 U/min vermischt. Das Verhältnis von A zu B-Komponente entsprach dem der jeweiligen Formulierung. Die A-Komponente war eine Vormischung der eingesetzten Polyole, Hilfsstoffe und des Treibmittels, die B-Komponente bestand aus dem Polyisocyanat. Am aufsteigenden Schaum wurden Start-, Steig- und Abbindezeit, vom ausgehärteten Schaum die Rohdichte, in den Tabellen auch als Dichte bezeichnet, in bekannter Weise gemessen. Die Feinzelligkeit wurde visuell verglichen und mit "feinzellig" (FZ) und "sehr feinzellig" (SFZ) eingeschätzt. Der Vergleich mit mikroskopischen Messungen zeigt, daß der Zelldurchmesser für "FZ" zwischen 300 µm und 400 µm, für "SFZ" kleiner 250 µm liegt.

### Herstellung von Hartschaumstoff-Formkörpern und deren Prüfung

Die Vermischung erfolgte mit einer Hochdruck-Schäummaschine PUROMAT® HD 30 der Fa. Elastogran. Andere Maschinen wurden gesondert angegeben. Das Mischungsverhältnis wurde entsprechend der Rezeptur eingestellt.

576 g des aus dem Mischkopf austretenden Gemisches aus A-Komponente und Isocyanat wurden in ein auf 45°C temperiertes Formwerkzeug der Abmessungen 300 mm x 400 mm x 80 mm (9,6 1-Form) gegossen, das anschließend fest verschlossen wurde. Der Schaumstoff entstand mit einer Verdichtung von 1,1 bis 2,0. Die Gesamtdichte des Formkörpers betrug dann 60 ± 1 kg/m³. In anderen Varianten wurde eine Gesamtdichte von 70 ± 1 kg/m³ oder 80 ± 1 kg/m³ durch Einwaage von 672 g bzw. 768 g der aufschäumenden Mischung in das gleiche Formwerkzeug eingestellt, wobei die Verdichtung zwischen 1,5 und 2 lag. Der NCO-Index, das molare Verhältnis von NCO zu wasserstoffaktiven Gruppen und die Abbindezeit wurden für Vergleichs- und erfindungsgemäße Beispiele konstant gehalten.

In einigen Fällen der PUR/PIR-Formulierungen wurden 2,5-Liter-Aluminium-Druckflaschen mit 250 g des aufschäumenden Gemisches (entspricht der Gesamtdichte 100 kg/m³) gefüllt, fest verschlossen und bei 200°C über 4 Wochen, zum Teil bei 220°C über 2 Wochen gelagert (Flaschentest). Der Schaumstoff wurde daraufhin visuell begutachtet. Bei Handverschäumungen analog zur Becherverschäumung wurden entsprechend kleinere Aluminium-Flaschen mit einem Volumen von 0,5 l bei einer Einwaage von 50 g verwendet.

In den folgenden Tabellen sind die Resultate der Verschäumungen gemäß der vorliegenden Erfindung im Vergleich mit nicht erfindungsgemäßen Beispielen ersichtlich.

### Beispiele 1 bis 6

### PUR-Hartschaum-Formulierungen (Becherverschäumungen)

### Stabilisator der Fa. Goldschmidt

### Katalysator: Gemisch tertiärer Amine

- V =: Vergleichsbeispiel,
- E =: Emulsion ohne Phasentrennung,
- PT =: Phasentrennung, teilweise, PV = Phasentrennung, vollständig, FZ = feinzellig,
- SVZ =: sehr feinzellig nach visueller Einschätzung, Reaktionszeiten im frisch emulgierten Zustand

| Beispiel | 1(V) | 2 | 3 | 4 | 5 | 6 |
|---|---|---|---|---|---|---|
| Polyol 1 | 57,3 | 57,3 | 57,3 | 57,3 | 57,3 | 57,3 |
| Polyol 3 | 30,0 | 30,0 | 30,0 | 30,0 | 30,0 | 30,0 |
| Dipropylenglykol | 6,0 | 6,0 | 6,0 | 6,0 | 6,0 | 6,0 |
| Glycerin | 2,0 | 2,0 | 2,0 | 2,0 | 2,0 | 2,0 |
| Stabilisator B8423 | 1,5 | 1,5 | 1,5 | 1,5 | 1,5 | 1,5 |
| Katalysator | 2,3 | 2,3 | 2,3 | 2,3 | 2,3 | 2,3 |
| Wasser | 0,9 | 0,9 | 0,9 | 0,9 | 0,9 | 0,9 |
| Summe | 100,0 | 100,0 | 100,0 | 100,0 | 100,0 | 100,0 |
| Cyclopentan | 17,5 | 17,5 | 17,5 | 17,5 | 17,5 | 17,5 |
| Polyol 6a | | 1,0 | | | | |
| Polyol 6b | | | 1,0 | | | |
| Polyol 6c | | | | 1,0 | | |
| Polyol 6d | | | | | 1,0 | |
| Polyol 6e | | | | | | 1,0 |
| Isocyanat 1 | 143,0 | 143,0 | 143,0 | 143,0 | 143,0 | 143,0 |
| | | | | | | |
| Startzeit in sec | 12 | 11 | 11 | 11 | 11 | 10 |
| Abbindezeit in sec | 65 | 62 | 60 | 61 | 63 | 61 |
| Steigzeit in sec | 115 | 111 | 116 | 112 | 114 | 110 |
| Dichte in kg/m ³ | 27,6 | 27,6 | 27,6 | 27,6 | 27,6 | 27,6 |
| | | | | | | |

| Stabilität Emulsion | | | | | | |
|---|---|---|---|---|---|---|
| Sofort | E | E | E | E | E | E |
| Nach 4 h | PT | E | E | E | E | E |
| Nach 1 Tag | PT | E | E | E | E | E |
| Nach 7 Tagen | PV | PT | PT | E | PT | E |
| Nach 3 Wochen | PV | PT | PT | PT | PT | PT |
| Schaumstruktur | FZ | FZ | FZ | SFZ | FZ | SFZ |

Die in der Tabelle angegebenen Teile sind Masse-Teile.

### Beispiele 7 bis 12

### PUR-Hartschaum-Formulierungen (Becherverschäumungen)

### Stabilisator der Fa. Goldschmidt;

### Katalysator: Gemisch tertiärer Amine;

- V =: Vergleichsbeispiel, E = Emulsion ohne Phasentrennung,
- PT =: Phasentrennung, teilweise, PV = Phasentrennung, vollständig,
- FZ =: feinzellig,
- SVZ =: sehr feinzellig nach visueller Einschätzung, Reaktionszeiten im frisch emulgierten Zustand.

Setzt man in Beispiel 7 anstelle von Polyol 4 Polyol 7 ein, erhält man eine Emulsion entsprechend DE-A-4328383, die jedoch nach 1 Stunde zerfällt.

| Beispiel | 7(V) | 8 | 9 | 10 | 11 | 12 |
|---|---|---|---|---|---|---|
| Polyol 1 | 57,3 | 57,3 | 57,3 | 57,3 | 57,3 | 57,3 |
| Polyol 4 | 30,0 | 30,0 | 30,0 | 30,0 | 30,0 | 30,0 |
| Dipropylenglykol | 6,0 | 6,0 | 6,0 | 6,0 | 6,0 | 6,0 |
| Glycerin | 2,0 | 2,0 | 2,0 | 2,0 | 2,0 | 2,0 |
| Stabilisator B8423 | 1,5 | 1,5 | 1,5 | 1,5 | 1,5 | 1,5 |
| Katalysator | 2,3 | 2,3 | 2,3 | 2,3 | 2,3 | 2,3 |
| Wasser | 0,9 | 0,9 | 0,9 | 0,9 | 0,9 | 0,9 |
| Summe | 100,0 | 100,0 | 100,0 | 100,0 | 100,0 | 100,0 |
| Cyclopentan | 17,5 | 17,5 | 17,5 | 17,5 | 17,5 | 17,5 |
| Polyol 6a | | 1,0 | | | | |
| Polyol 6b | | | 1,0 | | | |
| Polyol 6c | | | | 1,0 | | |
| Polyol 6d | | | | | 1,0 | |
| Polyol 6e | | | | | | 1,0 |
| Isocyanat 1 | 143,0 | 143,0 | 143,0 | 143,0 | 143,0 | 143,0 |
| | | | | | | |
| Startzeit in sec | 10 | 10 | 10 | 10 | 11 | 10 |
| Abbindezeit in sec | 65 | 61 | 61 | 60 | 62 | 60 |
| Steigzeit in sec | 110 | 100 | 98 | 100 | 98 | 97 |
| Dichte in kg/m ³ | 27,4 | 28,2 | 28,5 | 28,9 | 27,7 | 28,2 |
| | | | | | | |

| Stabilität Emulsion | | | | | | |
|---|---|---|---|---|---|---|
| Sofort | E | E | E | E | E | E |
| Nach 4 h | E | E | E | E | E | E |
| Nach 1 Tag | PT | E | E | E | E | E |
| Nach 7 Tagen | PV | E | E | PT | E | E |
| Nach 3 Wochen | PV | PT | PT | PT | PT | E |
| Schaumstruktur | FZ | SFZ | SFZ | SFZ | SFZ | FZ |

### Beispiele 13 bis 18

### PUR-Hartschaum-Formulierungen (Becherverschäumungen)

### Stabilisator der Fa. Goldschmidt; Katalysator: Gemisch tertiärer Amine;

- V =: Vergleichsbeispiel, E = Emulsion ohne Phasentrennung,
- PT =: Phasentrennung, teilweise, PV = Phasentrennung, vollständig,
- FZ =: feinzellig, SVZ = sehr feinzellig nach visueller Einschätzung, Reaktionszeiten im frisch emulgierten Zustand.

| Beispiel | 13(V) | 14 | 15 | 16 | 17 | 18 |
|---|---|---|---|---|---|---|
| Polyol 2 | 57,3 | 57,3 | 57,3 | 57,3 | 57,3 | 57,3 |
| Polyol 4 | 30,0 | 30,0 | 30,0 | 30,0 | 30,0 | 30,0 |
| Dipropylenglykol | 6,0 | 6,0 | 6,0 | 6,0 | 6,0 | 6,0 |
| Glycerin | 2,0 | 2,0 | 2,0 | 2,0 | 2,0 | 2,0 |
| Stabilisator B8423 | 1,5 | 1,5 | 1,5 | 1,5 | 1,5 | 1,5 |
| DMCHA | 2,3 | 2,3 | 2,3 | 2,3 | 2,3 | 2,3 |
| Wasser | 0,9 | 0,9 | 0,9 | 0,9 | 0,9 | 0,9 |
| Summe | 100,0 | 100,0 | 100,0 | 100,0 | 100,0 | 100,0 |
| | | | | | | |
| Cyclopentan | 17,5 | 17,5 | 17,5 | 17,5 | 17,5 | 17,5 |
| Polyol 6a | | 1,0 | | | | |
| Polyol 6b | | | 1,0 | | | |
| Polyol 6c | | | | 1,0 | | |
| Polyol 6d | | | | | 1,0 | |
| Polyol 6e | | | | | | 1,0 |
| Isocyanat 1 | 143,0 | 143,0 | 143,0 | 143,0 | 143,0 | 143,0 |
| | | | | | | |
| Startzeit in sec | 10 | 11 | 10 | 11 | 11 | 10 |
| Abbindezeit in sec | 65 | 63 | 62 | 60 | 62 | 60 |
| Steigzeit in sec | 110 | 102 | 98 | 101 | 97 | 99 |
| Dichte in kg/m³ | 27,6 | 28,3 | 28,8 | 28,4 | 27,9 | 28,5 |
| | | | | | | |

| Stabilität Emulsion | | | | | | |
|---|---|---|---|---|---|---|
| Sofort | E | E | E | E | E | E |
| Nach 4 h | E | E | E | E | E | E |
| Nach 1 Tag | E | E | E | E | E | E |
| Nach 7 Tagen | PV | E | PT | PT | E | E |
| Nach 3 Wochen | PV | PT | PT | PT | PT | PT |
| Schaumstruktur | FZ | FZ | FZ | FZ | SFZ | SFZ |

### Beispiele 19 bis 24

### PUR/PIR-Hartschaum-Formulierungen (Becherverschäumungen)

### Stabilisator der Fa. Goldschmidt,

- V =: Vergleichsbeispiel, E = Emulsion ohne Phasentrennung,
- PT =: Phasentrennung, teilweise, PV = Phasentrennung, vollständig,
- FZ =: feinzellig, SVZ = sehr feinzellig nach visueller Einschätzung, Reaktionszeiten im frisch emulgierten Zustand.

Setzt man anstelle Polyol 1 Polyol 7 in der gleichen Menge ein, entmischt sich die Emulsion in 1 Stunde.

| Beispiel | 19(V) | 20 (V) | 21 | 22 | 23 | 24 |
|---|---|---|---|---|---|---|
| Polyol 5 | 57,22 | 25,61 | 25,61 | 25,61 | 25,61 | 25,61 |
| Polyol 1 | | 31,61 | | | | |
| Polyol 6a | | | 31,61 | | | |
| Polyol 6b | | | | 31,61 | | |
| Polyol 6c | | | | | 31,61 | |
| Polyol 6d | | | | | | 31,61 |
| Dipropylenglykol | 16,65 | 16,65 | 16,65 | 16,65 | 16,65 | 16,65 |
| Ethylenglykol | 2,72 | 2,72 | 2,72 | 2,72 | 2,72 | 2,72 |
| Stabilisatorgemisch | 2,56 | 2,56 | 2,56 | 2,56 | 2,56 | 2,56 |
| Wasser | 0,38 | 0,38 | 0,38 | 0,38 | 0,38 | 0,38 |
| Kaliumacetat | 2,41 | 2,41 | 2,41 | 2,41 | 2,41 | 2,41 |
| Tertiäres Amin | 0,26 | 0,26 | 0,26 | 0,26 | 0,26 | 0,26 |
| Cyclopentan | 17,80 | 17,80 | 17,80 | 17,80 | 17,80 | 17,80 |
| Summe | 100,0 | 100,0 | 100,0 | 100,0 | 100,0 | 100,0 |
| Isocyanat 1 | 300,0 | 300,0 | 300,0 | 300,0 | 300,0 | 300,0 |
| | | | | | | |
| Startzeit in sec | 17 | 15 | 18 | 19 | 17 | 18 |
| Abbindezeit in sec | 26 | 25 | 29 | 29 | 29 | 28 |
| Steigzeit in sec | 40 | 39 | 43 | 44 | 43 | 42 |
| Rohdichte in kg/m ³ | 70 | 66 | 64,9 | 63 | 68 | 66 |
| | | | | | | |

| Stabilität Emulsion | | | | | | |
|---|---|---|---|---|---|---|
| Sofort | E | E | E | E | E | E |
| Nach 4 h | E | E | E | E | E | E |
| Nach 1 Tag | E | E | E | E | E | E |
| Nach 7 Tagen | PV | PT | E | E | E | E |
| Nach 3 Wochen | PV | PV | E | E | E | E |
| Nach 2 Monaten | - | - | E | E | PT | PV |
| Schaumstruktur | FZ | FZ | SFZ | SFZ | SFZ | SFZ |

### Beispiele 25 bis 27

### PUR/PIR-Hartschaum-Formulierungen (Becherverschäumungen/Handmischungen für Flaschentest)

### Stabilisator der Fa. Goldschmidt,

- V =: Vergleichsbeispiel, E = Emulsion ohne Phasentrennung,
- PT =: Phasentrennung, teilweise, PV = Phasentrennung, vollständig,
- FZ =: feinzellig, SVZ = sehr feinzellig nach visueller Einschätzung, Reaktionszeiten im frisch emulgierten Zustand.

| Beispiel | 25(V) | 26 | 27 |
|---|---|---|---|
| Polyol 5 | 57,22 | 25,61 | 25,61 |
| Polyol 6a | | 31,61 | 31,61 |
| Dipropylenglykol | 16,65 | 16,65 | 16,65 |
| Ethylenglykol | 2,72 | 2,72 | 2,72 |
| Stabilisatorgemisch | 2,56 | 2,56 | 2,56 |
| Wasser | 0,38 | 0,38 | 0,38 |
| Kaliumacetat | 2,41 | 2,41 | 2,41 |
| Tertiäres Amin | 0,26 | 0,26 | 0,26 |
| Summe | 100,0 | 100,0 | 100,0 |
| | | | |
| R 11 | 56,3 | | |
| iso-Pentan | | 17,0 | |
| Cyclopentan | | | 17,0 |
| Isocyanat 1 | 390,0 | 390,0 | 390,0 |
| | | | |
| Startzeit in sec | 17 | 13 | 18 |
| Abbindezeit in sec | 28 | 23 | 23 |
| Steigzeit in sec | 39 | 39 | 36 |
| Rohdichte in kg/m³ | 51 | 52 | 70 |
| | | | |

| Stabilität Emulsion | | | |
|---|---|---|---|
| Sofort | E | E | E |
| Nach 4 h | E | E | E |
| Nach 1 Tag | PT | E | E |
| Nach 7 Tagen | PV | E | E |
| Nach 3 Wochen | PV | PV | E |
| Schaumstruktur | FZ | FZ | SFZ |
| Flaschentest 2 Wochen, 200°C | Schaum zerstört, schwarz | Schaum hell, fest, 1 Riß | Schaum hell, fest |

## Patentansprüche

1. Lagerstabile, treibmittelhaltige halogenfreie Emulsionen zur Herstellung von Hartschaumstoffen auf Isocyanatbasis, bestehend aus
a) gegenüber Isocyanatgruppen reaktive Wasserstoffatome enthaltende Verbindungen,
b) Wasser,
c) physikalisch wirkende, halogenfreie Treibmittel, sowie gegebenenfalls
d) in der Polyurethanchemie übliche Hilfsmittel und/oder Zusatzstoffe,
**dadurch gekennzeichnet, daß** die Komponente a) Polyetheralkohole mit einer Funktionalität von größer als 1,5, einer Hydroxylzahl von 10 bis 100 mg KOH/g in einer Menge von 0,2 Masse-% bis 80 Masse-%, bezogen auf die Masse der Komponente a), enthält und als halogenfreie, physikalisch wirkende Treibmittel c) Kohlenwasserstoffe mit 3 bis 10 Kohlenstoffatomen eingesetzt werden.

2. Lagerstabile, treibmittelhaltige halogenfreie Emulsionen nach Anspruch 1, **dadurch gekennzeichnet, daß** die Polyetheralkohole eine Funktionalität von 2,5 bis 3,5 aufweisen.

3. Lagerstabile, treibmittelhaltige halogenfreie Emulsionen nach Anspruch 1 oder 2, **dadurch gekennzeichnet, daß** die Polyetheralkohole eine Hydroxylzahl von 25 mg KOH/G bis 50 mg KOH/g aufweisen.

4. Lagerstabile, treibmittelhaltige halogenfreie Emulsionen nach einem der Ansprüche 1 bis 3, **dadurch gekennzeichnet, daß** die Polyetherole in einer Menge von 1 bis 50 Masse-%, bezogen auf die Masse der Komponente a), eingesetzt werden.

5. Lagerstabile, treibmittelhaltige halogenfreie Emulsionen nach einem der Ansprüche 1 bis 4, **dadurch gekennzeichnet, daß** die Polyetherole durch Anlagerung von Ethylenoxid und/oder Propylenoxid an Glyzerin und/oder Trimethylolpropan hergestellt werden.

6. Lagerstabile, treibmittelhaltige halogenfreie Emulsionen nach einem der Ansprüche 1 bis 5, **dadurch gekennzeichnet, daß** die physikalisch wirkenden Treibmittel in einer Menge von mindestens 5 Gew.-%, bezogen auf das Gewicht der Komponenten a) bis d), eingesetzt werden.

7. Lagerstabile, treibmittelhaltige halogenfreie Emulsionen nach Anspruch 6, **dadurch gekennzeichnet, daß** die physikalisch wirkenden Treibmittel in einer Menge von mindestens 10 Gew.-%, bezogen auf das Gewicht der Komponenten a) bis d), eingesetzt werden.

8. Lagerstabile, treibmittelhaltige halogenfreie Emulsionen nach Anspruch 6 oder 7, **dadurch gekennzeichnet, daß** die physikalisch wirkenden Treibmittel in einer Menge von 10 bis 25 Gew.-%, bezogen auf das Gewicht der Komponenten a) bis d), eingesetzt werden.

9. Lagerstabile, treibmittelhaltige halogenfreie Emulsionen nach Anspruch 8, **dadurch gekennzeichnet, daß** die physikalisch wirkenden Treibmittel in einer Menge von 12 bis 21 Gew.-%, bezogen auf das Gewicht der Komponenten a) bis d), eingesetzt werden.

10. Verfahren zur Herstellung von Hartschaumstoffen auf Isocyanatbasis durch Umsetzung von lagerstabilen, treibmittelhaltigen halogenfreien Emulsionen nach einem der Ansprüche 1 bis 9 mit Polyisocyanaten.

11. Verwendung von Polyetheralkoholen mit einer Funktionalität von größer 1,5 und einer Hydroxylzahl von 10 bis 100 mg KOH/g als Emulsionsstabilisator für lagerstabile, treibmittelhaltige halogenfreie Emulsionen für die Herstellung von Hartschaumstoffen auf Isocyanatbasis.

## Claims

1. A storage-stable, blowing agent-containing halogen-free emulsion for producing rigid foams based on isocyanate, consisting of
a) compounds containing hydrogen atoms which are reactive toward isocyanate groups,
b) water,
c) physically acting, halogen-free blowing agents and, if desired,
d) auxiliaries and/or additives which are customary in polyurethane chemistry,
wherein the component a) comprises polyether alcohols having a functionality of greater than 1.5 and a hydroxyl number of from 10 to 100 mg KOH/g in an amount of from 0.2% by mass to 80% by mass, based on the mass of the component a), and the halogen-free, physically acting blowing agents c) used are hydrocarbons having from 3 to 10 carbon atoms.

2. A storage-stable, blowing agent-containing halogen-free emulsion as claimed in claim 1, wherein the polyether alcohols have a functionality of from 2.5 to 3.5.

3. A storage-stable, blowing agent-containing halogen-free emulsion as claimed in claim 1 or 2, wherein the polyether alcohols have a hydroxyl number of from 25 mg KOH/g to 50 mg KOH/g.

4. A storage-stable, blowing agent-containing halogen-free emulsion as claimed in any of claims 1 to 3, wherein the polyetherols are used in an amount of from 1 to 50% by mass, based on the mass of the component a).

5. A storage-stable, blowing agent-containing halogen-free emulsion as claimed in any of claims 1 to 4, wherein the polyetherols are prepared by addition of ethylene oxide and/or propylene oxide onto glycerol and/or trimethylolpropane.

6. A storage-stable, blowing agent-containing halogen-free emulsion as claimed in any of claims 1 to 5, wherein the physically acting blowing agents are used in an amount of at least 5% by weight, based on the weight of the components a) to d).

7. A storage-stable, blowing agent-containing halogen-free emulsion as claimed in claim 6, wherein the physically acting blowing agents are used in an amount of at least 10% by weight, based on the weight of the components a) to d).

8. A storage-stable, blowing agent-containing halogen-free emulsion as claimed in claim 6 or 7, wherein the physically acting blowing agents are used in an amount of from 10 to 25% by weight, based on the weight of the components a) to d).

9. A storage-stable, blowing agent-containing halogen-free emulsion as claimed in claim 8, wherein the physically acting blowing agents are used in an amount of from 12 to 21% by weight, based on the weight of the components a) to d).

10. A process for producing rigid foams based on isocyanate by reacting storage-stable, blowing agent-containing halogen-free emulsions as claimed in any of claims 1 to 9 with polyisocyanates.

11. The use of polyether alcohols having a functionality of greater than 1.5 and a hydroxyl number of from 10 to 100 mg KOH/g as emulsion stabilizer for storage-stable, blowing agent-containing halogen-free emulsions for producing rigid foams based on isocyanate.

## Revendications

1. Emulsions sans halogène, stables au stockage et contenant des agents porogènes pour la préparation de mousses rigides à base d'isocyanate, composées :
a) de composés contenant des atomes d'hydrogène réactifs aux radicaux isocyanate,
b) d'eau,
c) d'agents porogènes sans halogène à action physique, ainsi qu'éventuellement
d) d'adjuvants et/ou additifs courants dans la chimie des polyuréthannes,
**caractérisées en ce que** le composant a) contient des alcools de polyéther avec une fonctionnalité de plus de 1,5 et un indice d'hydroxyle de 10 à 100 mg de KOH/g dans une quantité de 0,2% en masse à 80 % en masse par rapport à la masse du composant a) et **en ce que** des hydrocarbures comportant 3 à 10 atomes de carbone sont utilisés comme agents porogènes sans halogène à action physique c).

2. Emulsions sans halogène, stables au stockage et contenant des agents porogènes selon la revendication 1, **caractérisées en ce que** les alcools de polyéther présentent une fonctionnalité de 2,5 à 3,5.

3. Emulsions sans halogène, stables au stockage et contenant des agents porogènes selon l'une des revendications 1 ou 2, **caractérisées en ce que** les alcools de polyéther présentent un indice d'hydroxyle de 25 mg KOH/g à 50 mg de KOH/g.

4. Emulsions sans halogène, stables au stockage et contenant des agents porogènes selon l'une des revendications 1 à 3, **caractérisées en ce que** les polyétherols sont utilisés dans une quantité de 1 à 50 % en masse par rapport à la masse du composant a).

5. Emulsions sans halogène, stables au stockage et contenant des agents porogènes selon l'une des revendications 1 à 4, **caractérisées en ce que** les polyétherols sont préparés par addition d'oxyde d'éthylène et/ou d'oxyde de propylène à de la glycérine et/ou du triméthylolpropane.

6. Emulsions sans halogène, stables au stockage et contenant des agents porogènes selon l'une des revendications 1 à 5, **caractérisées en ce que** les agents porogènes à action physique sont utilisés dans une quantité d'au moins 5 % en poids par rapport au poids des composants a) à d).

7. Emulsions sans halogène, stables au stockage et contenant des agents porogènes selon la revendication 6, **caractérisées en ce que** les agents porogènes à action physique sont utilisés dans une quantité d'au moins 10 % en poids par rapport au poids des composants a) à d).

8. Emulsions sans halogène, stables au stockage et contenant des agents porogènes selon l'une des revendications 6 ou 7, **caractérisées en ce que** les agents porogènes à action physique sont utilisés dans une quantité de 10 à 25 % en poids par rapport au poids des composants a) à d).

9. Emulsions sans halogène, stables au stockage et contenant des agents porogènes selon la revendication 8, **caractérisées en ce que** les agents porogènes à action physique sont utilisés dans une quantité de 12 à 21% en poids par rapport au poids des composants a) à d).

10. Procédé de préparation de mousses rigides à base d'isocyanate par réaction d'émulsions sans halogène, stables au stockage et contenant des agents porogènes selon l'une des revendications 1 à 9 avec des polyisocyanates.

11. Utilisation d'alcools de polyéther présentant une fonctionnalité supérieure à 1,5 et un indice d'hydroxyle de 10 à 100 mg de KOH/g comme stabilisateurs d'émulsion pour des émulsions sans halogène, stables au stockage et contenant des agents porogènes, pour la préparation de mousses rigides à base d'isocyanate.
